# EUROPEAN PATENT APPLICATION

(11) **EP 1 526 657 A1**
(43) Date of publication of application: **27.04.2005**
(21) Application number: 03741339.0
(22) Date of filing: 11.07.2003
(51) Int. Cl.: H04B 7/26, H04Q 7/30

(54) **RADIO DEVICE AND BASE STATION DEVICE**

(30) Priority: 07.08.2002 JP 2002230421
(71) Applicant: MATSUSHITA ELECTRIC INDUSTRIAL CO., LTD., Kadoma-shi, Osaka 571-8501 (JP)
(72) Inventor: SUZUKI, Hidetoshi, Kanagawa 239-0841 (JP)
(74) Representative: Grünecker, Kinkeldey, Stockmair & Schwanhäusser Anwaltssozietät
(86) International application number: PCT/JP2003/008823
(87) International publication number: WO 2004/015891

(57) **Abstract**

An antenna directivity control section 102 controls an antenna adaptively by control of an arrival direction detecting section 106, and narrows down a area for transmitting data. DPCH transmission power control sections 111-1 to 111-n perform transmission power control of a DPCH transmission signal based on a request signal for increase/decrease of the transmission power inputted from radio receivers 104-1 to 104-n. Power judgement sections 112-1 to 112-n determine how much the transmission power is increased/decreased from the transmission power to which the transmission power control is applied, and output a signal according to a quantity of increase/decrease of the transmission power to adaptive modulation control sections 113-1 to 113-n. The adaptive modulation control sections 113-1 to 113-n apply adaptive modulation control to packet data of a HS-DSCH, based on a signal inputted from the power judgement sections 112-1 to 112-n. Thus, it is possible to prevent a reception signal from producing errors due to erroneous beam forming and adaptive modulation.

## Description

### Technical Field

The present invention relates to a radio apparatus and a base station apparatus that perform adaptive modulation and beam forming, and particularly relates to the radio apparatus and the base station apparatus that communicate by HSDPA.

### Background Art

As a development system of WCDMA (Wideband Code Division Multiple Access), the standardization of the techniques referred to as HSDPA (High Speed Downlink Packet Access) for expansion of packets is in progress. HSDPA implements communication on a DPCH (Dedicated downlink physical channel), which is a channel in conventional WCDMA, while simultaneously transmitting packet data in downlink through a high speed channel called a HS-DSCH (High Speed Downlink Shared Channel) in parallel.

In uplink, when a mobile station apparatus can receive the packet data transmitted using the HS-DSCH normally, it returns an ACK (Acknowledge) signal. Meanwhile, when the mobile station apparatus can not receive the packet data normally, it returns a NACK (Nonacknowledge) signal.

HSDPA uses a signal called CQI (Channel Quality Indicator) report from the mobile station apparatus to the base station apparatus. The CQI (Channel Quality Indicator) report reports a propagation path condition to the mobile station apparatus, measured using a signal of a pilot channel (CPICH). Then, using the CQI report received from the mobile station apparatus, the base station apparatus applies the processing called adaptive modulation to the packet data that changes the modulation scheme and coding rate according to the propagation path condition, and thereafter transmits the packet data to the mobile station apparatus by the HS-DSCH. Note that the pilot channel (CPICH) is a signal of a constant power.

Conventionally, there is a technique called beam forming. By the beam forming, transmission/reception is carried out by narrowing down beams of a radio wave by forming directivity, so that only a specified mobile station apparatus can receive with a good reception quality. Thus, the mobile station apparatus can strongly receive only a specified radio wave when performing communication, and the base station apparatus neither transmits the radio wave in an unnecessary direction nor receives the radio wave from the unnecessary direction, thereby improving using efficiency of radio waves.

Next, assuming a case where the combinational operation between beam forming and HSDPA, the difference in the signal transmitted in the DPCH, CPICH, and HS-DSCH, with use of beam forming and without use of beam forming, will be explained.

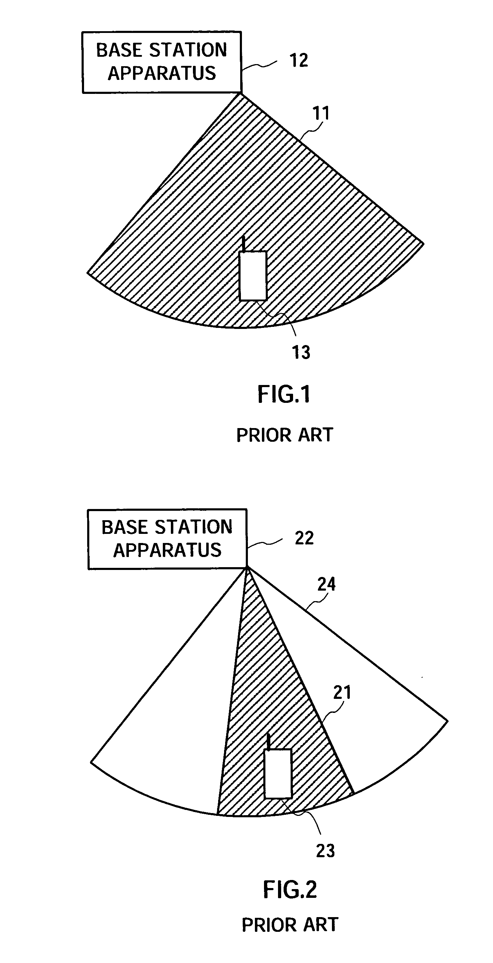

FIG.1 is a view showing a case in which a signal is transmitted from the base station apparatus 12 to the mobile station apparatus 13 without using the beam forming. In this case, directivity is formed in an area 11 shown by hatched lines in FIG.1, and the signal is transmitted using the DPCH, CPICH, and HS-DSCH. In this case, the signal transmitted using the DPCH, CPICH, and HS-DSCH is transmitted in the same area 11. Therefore, the signal of the HS-DSCH is subjected to the same fading variation with the signal of the CPICH. Accordingly, in the mobile station apparatus 13, it is considered that the HS-DSCH is subjected to the same fading variation caused by the fluctuation in the transmission power of the CPICH. Thus, in the mobile station apparatus 13, the influence of the fading variation can be removed from the signal of the HS-DSCH using the CPICH, and therefore in the HS-DSCH, a modulation scheme in which information is superimposed on an amplitude signal such as 16 QAM can be used.

FIG.2 is a view showing a case in which the signal is transmitted from the base station apparatus 22 to the mobile station apparatus 23 using the beam forming. In this case, the base station apparatus 22 communicates with the mobile station apparatus 23 which exists in an area 21, by further narrowing down the beams of a radio wave in the area 21. The area 21 shown by hatched lines, is within an area 24 in which the directivity is formed, and is a narrower area than the area 24. In the beam forming described above, the signal of the CPICH is transmitted within the area 24, and the signal of the DPCH and HS-DSCH is transmitted within the area 21. Accordingly, the signal of the HS-DSCH is subjected to the fading variation different from the signal of the CPICH. In this case, the CQI report prepared from the CPICH signal is highly likely to be incorrect.

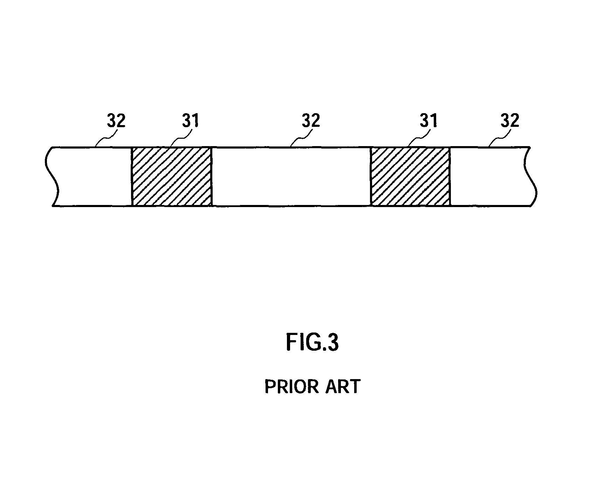

Meanwhile, as shown in FIG.3, in the signal of DPCH, a pilot signal 31 and user data 32 are time-multiplexed. Usually, power control is applied to the signal transmitted by the DPCH so that a received power value is constant in the mobile station apparatus. Therefore, in the mobile station apparatus, the CQI report can not be prepared using the pilot signal 31.

Incidentally, in the base station apparatus, when keeping the electric power constant for transmitting, the CQI report can be prepared using the pilot signal 31 in the mobile station apparatus. However, the pilot signal 31 is a temporally short signal, and therefore it is difficult to measure a reception state and the CQI report is highly likely to be incorrect.

However, in the conventional radio apparatus and the base station apparatus, adaptive modulation is performed based on the CQI report prepared in the mobile station apparatus. Therefore, when the CQI report is incorrect, the adaptive modulation is performed incorrectly. Thus, the modulation scheme and encoding rate can not be changed be suitable for the propagation path condition of the mobile station apparatus or according to the propagation path condition of the mobile station apparatus, there arises a problem that error is generated in a signal received by the mobile station apparatus.

### Disclosure of Invention

The present inventor has focused on that, when adaptive modulation technique such as HSDPA and beam forming are used together, the transmission area of the CPICH for preparing the CQI report and the transmission area by the beam forming are different, and that, therefore, the likelihood is high that the CQI report prepared using the CPICH does not show correctly a propagation path condition to a mobile station apparatus that exists in the area where transmission is performed by the beam forming, and has thus arrived at the present invention.

An object of the present invention is to prevent a reception signal from producing error by performing adaptive modulation erroneously.

In HSDPA communication, the above object is achieved by using transmission power under transmission power control in a base station apparatus and estimating the propagation path condition to the mobile station apparatus without preparing the CQI report, and by performing adaptive modulation based on the estimation result.

### Brief Description of Drawings

FIG.1 is a view explaining a transmission area of a transmission signal from a base station apparatus to a mobile station apparatus;
FIG.2 is a view explaining the transmission area of the transmission signal from the base station apparatus to the mobile station apparatus;
FIG.3 is a view showing a pilot symbol of a DPCH;
FIG.4 is a block diagram showing a configuration of a radio apparatus according to embodiment 1 of the present invention;
FIG.5 is a block diagram showing the configuration of a mobile station apparatus which is a communication party of the radio apparatus according to embodiment 1 of the present invention; and

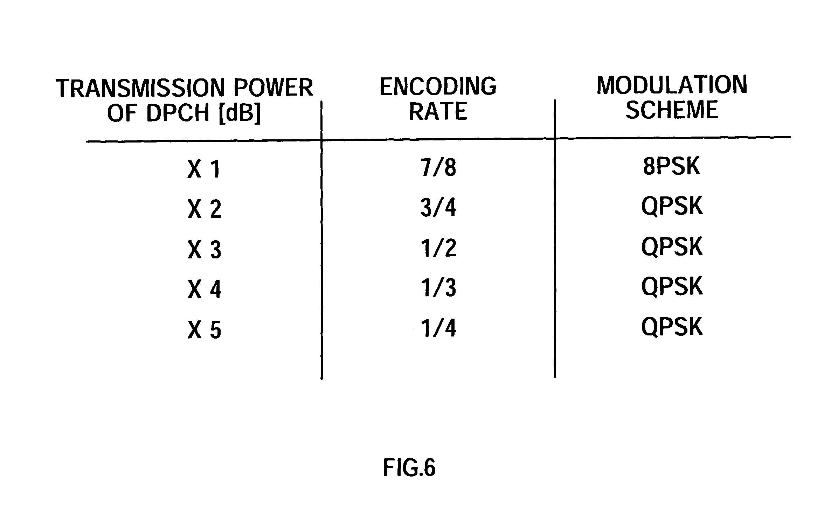

FIG.6 is a view showing an encoding rate and a modulation scheme for every transmission power of the DPCH according to embodiment 1 of the present invention.

### Best Mode for Carrying Out Invention

Embodiments of the present invention will be explained below in detail with reference to the drawings.

### (Embodiment 1)

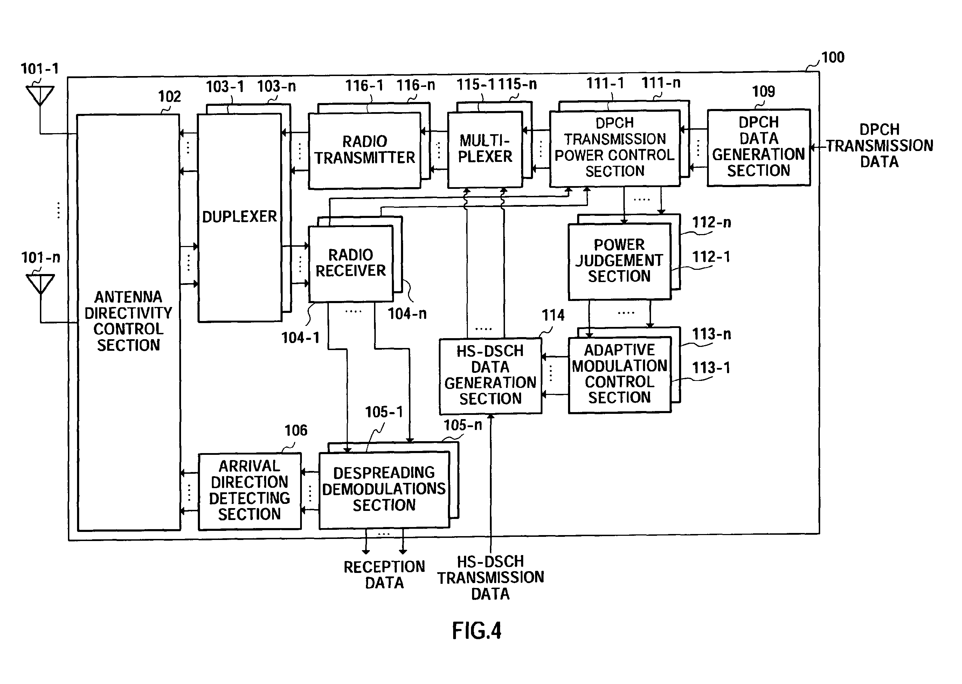

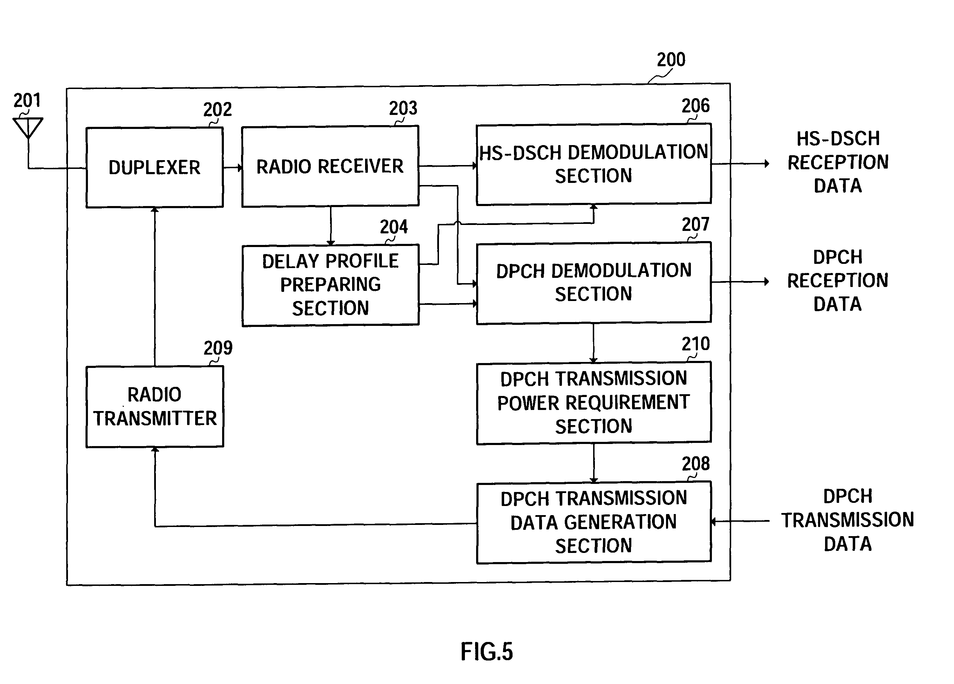

FIG.4 is a block diagram showing the configuration of a radio apparatus 100 according to the present embodiment, and FIG.5 is a block diagram showing the configuration of a mobile station apparatus 200 which is a communication party of the radio apparatus according to the present embodiment.

First, the configuration of the radio apparatus 100 will be explained.

An antenna directivity control section 102 controls antennas 101-1 to 101-n based on a control signal inputted from an arrival direction detector 106, and transmits a transmission signal or receives a reception signal. The antenna directivity control section 102 can perform beam forming by forming directivity by control of the antenna.

Duplexers 103-1 to 103-n output the reception signal inputted from the antenna directivity control section 102 to radio receivers 104-1 to 104-n, and output the transmission signal inputted from radio transmitters 116-1 to 116-n to the antenna directivity control section 102.

The radio receivers 104-1 to 104-n down-convert the reception signal inputted from duplexers 103-1 to 103-n from a radio frequency into a base band frequency, and output the down-converted signal to despreading demodulation sections 105-1 to 105-n, and also output it to DPCH transmission power control sections 111-1 to 111-n.

The despreading demodulation sections 105-1 to 105-n apply despreading processing to the reception signal inputted from the radio receivers 104-1 to 104-n using the same spreading code used for the spreading and thereafter apply the demodulation processing, and output the demodulated signal to an arrival direction detector 106 and obtain reception data.

The arrival direction detector 106 detects the direction of the mobile station apparatus using an arrival direction estimating technique used in an adaptive array antenna, for example, from the despreading demodulation signal inputted from the despreading demodulation sections 105-1 to 105-n, and outputs the detected result to the antenna directivity control section 102.

A DPCH data generation section 109 generates the transmission signal to be transmitted using the DPCH, and outputs the transmission signal to the DPCH transmission power control sections 111-1 to 111-n.

The DPCH transmission power control sections 111-1 to 111-n judge a propagation path condition from the signal requiring increase and decrease of the transmission power. The signal is included in the reception signal of the DPCH inputted from the radio receivers 104-1 to 104-n, and is transmitted from the mobile station apparatus. Then, the DPCH transmission power control sections 111-1 to 111-n apply transmission power control to the transmission signal inputted from the DPCH data generation section 109 according to the judged propagation path condition, and output the transmission signal, to which the transmission power control is applied, to multiplexers 115-1 to 115-n, and also to power judgement sections 112-1 to 112-n. The DPCH transmission power control sections 111-1 to 111-n perform processing of increasing the transmission power of DPCH when command requiring the transmission power to be increased is sent from the mobile station apparatus. Meanwhile, when command requiring the transmission power to be decreased is sent from the mobile station apparatus, the DPCH transmission power control sections 111-1 to 111-n perform processing of decreasing the transmission power of the DPCH.

The power judgement sections 112-1 to 112-n generate communication party information showing the propagation path condition to the mobile station apparatus from the transmission power inputted from the DPCH transmission power control sections 111-1 to 111-n, and output the generated communication party information to the adaptive modulation control sections 113-1 to 113-n. Note that a generation method of the communication party information will be later explained in detail.

The adaptive modulation control sections 113-1 to 113-n determine how to perform adaptive modulation according to the communication party information inputted from the power judgement sections 112-1 to 112-n, and apply adaptive modulation control to a HS-DSCH data generation section 114. The adaptive modulation is performed based on the propagation path condition to the mobile station apparatus using a phase while also changing the coding rate. Generally, multi-level modulation used in the adaptive modulation is used so as to make the coding rate small when the radio wave propagation path condition of the mobile station apparatus is good, and also is used so as to increase a bit rate. Therefore, even if not using the multi-amplitude level modulation such as 16QAM in which a plurality of information is superimposed on an amplitude signal, by changing the coding rate, an error rate of the reception signal can be made small when the radio wave propagation path condition is good. Also, as a means to change the modulation scheme in a phase direction, the adaptive modulation can be applied to QPSK transmission by increasing a signal point such as 8PSK and 16PSK in the phase direction. A method of the adaptive modulation will be later explained in detail.

A HS-DSCH data generation section 114 generates transmission packet data by the adaptive modulation control from the adaptive modulation control sections 113-1 to 113-n, and outputs the generated data to multiplexers 115-1 to 115-n.

The multiplexers 115-1 to 115-n multiplex the transmission signal of the DPCH inputted from the DPCH transmission power control sections 111-1 to 111-n and the transmission signal of the HS-DSCH inputted from the HS-DSCH data generation section 114, and outputs the multiplexed signal to a radio transmitters 116-1 to 116-n.

The radio transmitters 116-1 to 116-n up-convert the transmission signal inputted from the multiplexers 115-1 to 115-n from the base band frequency into the radio frequency, and outputs the up-converted signal to the duplexers 103-1 to 103-n.

Next, the configuration of amobile station apparatus 200 will be explained.

A duplexer 202 outputs the reception signal received by an antenna 201 to a radio receiver 203, and transmits the transmission signal inputted from a radio transmitter 209 from the antenna 201.

The radio receiver 203 down-converts the reception signal inputted from the duplexer 202 from the radio frequency into the base band frequency, and outputs the down-converted signal to a delay profile preparing section 204, a HS-DSCH demodulation section 206 and a DPCH demodulation section 207.

The delay profile preparing section 204 prepares a delay profile from the reception signal inputted from the radio receiver 203, and outputs a synchronization signal prepared from the delay profile to the HS-DSCH demodulation section 206 and the DPCH demodulation section 207.

Conventionally, it is necessary to operate the CPICF demodulation section and prepare the CQI report. However, in this embodiment, it is not necessary to prepare the CQI report, and therefore it is not necessary to receive the signal of the CPICH, and accordingly the CPICH demodulation section is unnecessary. Therefore, it is not necessary to prepare the delayprofile of the CPICH. Accordingly, when a plurality of paths are assigned to RAKE fingers, the need for complicated processing of assigning by distinguishing the DPCH from CPICH is eliminated, and also the need for complicated processing of preparing the delay profile for both DPCH and CPICH is eliminated. Therefore, the processing of the reception signal is simplified, and the reception signal can be processed at higher speed, at lower power consumption, and at lower cost.

The HS-DSCH demodulation section 206 applies demodulation processing to the reception signal of the HS-DSCH inputted from the radio receiver 203 using the synchronization signal inputted from the delay profile preparing section 204, and obtains the reception data of the HS-DSCH.

The DPCH demodulation section 207 applies demodulation processing to the reception signal of the DPCH inputted from the radio receiver 203 using the synchronization signal inputted from the delay profile preparing section 204 and obtains the reception data of the DPCH.

The DPCH transmission data generation section 208 generates the transmission signal of the DPCH including the command requiring increase/decrease of the transmission power inputted from a DPCH transmission power requiring section 210 and outputs the generated transmission signal to a radio transmitter 209.

The radio transmitter 209 up-converts the transmission signal of the DPCH inputted from the DPCH transmission data generation section 208 into a radio frequency, and outputs the up-converted transmission signal to the duplexer 202.

A DPCH transmission power requiring section 210 outputs the command to the radio apparatus 100 for increasing the transmission power of downlink DPCH, based on the demodulation result inputted from the DPCH demodulation section 207 when signal intensity of the pilot signal 31 of downlink DPCH is weaker than a predetermined level. Meanwhile, when the signal intensity of the pilot signal 31 of the downlink DPCH is stronger than a predetermined value, the DPCH transmission power requiring section 210 outputs to the radio apparatus 100 the command for decreasing the transmission power of the downlink DPCH.

Next, a generation method of the communication party information in the power judgement sections 112-1 to 112-n and an adaptive modulation method in the adaptive modulation control sections 113-1 to 113-n will be explained using FIG. 3. FIG.3 is a view showing the encoding rate and the modulation scheme selected according to the transmission power of the DPCH. Note that the transmission power of the DPCH becomes smaller in order of X1, X2, X3, X4, and X5. Generally, it is conceivable that the larger the transmission power becomes, the worse the propagation path condition becomes, and the smaller the transmission power becomes, the better the propagation path condition becomes. Therefore, in the adaptive modulation, the coding rate is made smaller with approaching from X1 to X5.

The power judgement sections 112-1 to 112-n output a signal 1 to the adaptive modulation control sections 113-1 to 113-n when the DPCH transmission power inputted from the DPCH transmission power control sections 111-1 to 111-n is higher than X1dB outputs a signal 2 to the adaptive modulation control sections 113-1 to 113-n when the DPCH transmission power is lower than X1dB and higher than X2dB, outputs a signal 3 to the adaptive modulation control sections 113-1 to 113-n when the DPCH transmission power is lower than X2dB and higher than X3dB, outputs a signal 4 to the adaptive modulation control sections 113-1 to 113-n when the DPCH transmission power is lower than X3dB and higher than X4dB, and outputs a signal 5 to the adaptive modulation control sections 113-1 to 113-n when the DPCH transmission power is lower than X4dB. Here, the signal 1 to the signal 5 correspond to communication party information. Note that information other than the signals from the signal 1 to signal 5 may be generated as the communication party information, and the communication party information can be arbitrarily generated if the propagation path condition to the mobile station apparatus can be determined.

Also, the adaptive modulation control sections 113-1 to 113-n set the modulation scheme to 8PSK and set the encoding rate to 7/8, when the signal 1 is inputted from the power judgement sections 112-1 to 112-n, set the modulation scheme to QPSK and set the encoding rate to 3/4 when the signal 2 is inputted from the power judgement sections 112-1 to 112-n, set the modulation scheme to QPSK and set the encoding rate to 1/2 when the signal 3 is inputted from the power judgement sections 112-1 to 112-n, set the modulation scheme to QPSK and set the encoding rate to 1/3 when the signal 4 is inputted from the power judgement sections 112-1 to 112-n, and set the modulation scheme to QPSK and set the encoding rate to 1/4 when the signal 5 is inputted from the power judgement sections 112-1 to 112-n. As for the modulation scheme, those modulation schemes that allow no information superimposed on the amplified signal are used including QPSK modulation and the 8PSK scheme. Note that other modulation scheme than the QPSK modulation scheme can be arbitrarily selected, and in this case, those that modulate frequency may be used.

Thus, according to the radio apparatus and the base station apparatus of the present embodiment, the propagation path condition to the mobile station apparatus is determined from transmission power, thereby enabling adaptive modulation using the transmission power value in the base station apparatus without preparing the CQI report in the mobile station apparatus. Therefore, it is possible to prevent the reception signal from producing errors by erroneously performing the adaptive modulation using the incorrect CQI report.

Moreover, the mobile station apparatus does not need to receive the CPICH, does not need to prepare the CQI report, and accordingly does not need to prepare the delay profile of the CPICH, thus making the processing of the reception signal in a communication terminal apparatus simplified at a high speed.

Moreover, since the adaptive modulation is not performed using the CQI report prepared from the CPICH, the beam forming and the HSDPA scheme can be used together.

Moreover, since the CQI report does not need to be prepared, the transmission power for transmitting the signal from the mobile station apparatus to the radio apparatus can be reduced, the consumption power of the mobile station apparatus can be suppressed, the interference quantity of an uplink channel can be suppressed, and use efficiency of the uplink channel can be increased.

Moreover, since the modulation is performed using one of the phase or the frequency without using the multi-level modulation and the adaptive modulation is performed by changing the multivalue numeric of the frequency, the encoding rate and the phase point, then, the communication system having both the advantage of HSDPA and the advantage of beam forming can be provided. That is, HSDPA has the advantage of transmitting packet data at a high speed by performing the adaptive modulation according to the propagation path condition to the mobile station apparatus. Also, beam forming has the advantage of surely transmitting a large quantity of data to the mobile station apparatus which exists in a specified area.

Incidentally, in this embodiment, the adaptive modulation is performed using transmission power. However, if the propagation path condition to the mobile station apparatus can be estimated, any one other than the transmission power may be used. In addition, the radio apparatus 100 can be provided in the base station apparatus. Further, it is applicable to the communication between the communication terminal apparatus other than the mobile station apparatus and the base station apparatus.

As described above, according to the present invention, it is possible to prevent the reception signal from producing errors by erroneously performing the adaptive modulation.

This present application is based on Japanese Patent Application No.2002-230421 filed on August 7, 2002, entire content of which is expressly incorporated herein by reference.

### Industrial Applicability

The present invention is suitable for use for a radio apparatus and a base station apparatus that perform adaptive modulation and directional transmission, and particularly suitable for use for a radio apparatus and a base station apparatus that perform HSDPA communication.
FIG.1
   BASE STATION APPARATUS
FIG.2
   BASE STATION APPARATUS
FIG.4
   - 102:: ANTENNA DIRECTIVITY CONTROL SECTION
   - 103-1 to 103-n:: DUPLEXER
   - 106:: ARRIVAL DIRECTION DETECTING SECTION
   - 116-1 to 116-n:: RADIO TRANSMITTER
   - 104-N:: RADIO RECEIVER
   - 105-1 to 105-N:: DESPREADING DEMODULATION SECTION
   - 115-1 to 115-n:: MULTIPLEXER
   - 114:: HS-DSCH DATA GENERATION SECTION
   - 111-1 to 111-n:: DPCH TRANSMISSION POWER CONTROL SECTION
   - 112-n to 112-1:: POWER JUDGEMENT SECTION
   - 113-n to 113-1:: ADAPTIVE MODULATION CONTROL SECTION
   - 109:: DPCH DATA GENERATION SECTION
   DPCH TRANSMISSION DATA
   RECEPTION DATA
   HS-DSCH TRANSMISSION DATA
FIG.5
   - 202:: DUPLEXER
   - 203:: RADIO RECEIVER
   - 204:: DELAY PROFILE PREPARING SECTION
   - 206:: HS-DSCH DEMODULATION SECTION
   - 207:: DPCH DEMODULATION SECTION
   - 209:: RADIO TRANSMITTER
   - 210:: DPCH TRANSMISSION POWER REQUIREMENT SECTION
   - 208:: DPCH TRANSMISSION DATA GENERATION SECTION
   HS-DSCH RECEPTION DATA
   DPCH RECEPTION DATA
   DPCH TRANSMISSION DATA
FIG.6
   TRANSMISSION POWER ON
   ENCODING RATE
   MODULATION SCHEME

## Claims

1. A radio apparatus, comprising:
a transmission power controller that performs transmission power control for transmitting a transmission signal to a communication party using a reception signal;
an adaptive modulator that applies adaptive modulation to transmission packet data according to transmission power controlled by the transmission power controller; and
a transmitter that performs directional transmission of the transmission packet data to which the adaptive modulation is applied by the adaptive modulator.

2. The radio apparatus according to claim 1, wherein the adaptive modulator applies the adaptive modulation to the transmission packet data using one of a phase and a frequency.

3. A base station apparatus provided with a radio apparatus, the radio apparatus comprising:
a transmission power controller that performs transmission power control for transmitting a transmission signal to a communication party using a reception signal;
an adaptive modulator that applies adaptive modulation to transmission packet data according to transmission power controlled by the transmission power controller; and
a transmitter that performs directional transmission of the transmission packet data to which the adaptive modulation is applied by the adaptive modulator.

4. A transmission method comprising the steps of:
performing transmission power control for transmitting a transmission signal to a communication party using a reception signal;
applying adaptive modulation to transmission packet data according to transmission power controlled by the transmission power control; and
performing directional transmission of the transmission packet data to which the adaptive modulation is applied.
